# FASCICULE DE BREVET EUROPEEN

(11) **EP 1 640 196 B1**
(45) Date de publication et mention de la délivrance du brevet: **14.11.2012**
(21) Numéro de dépôt: 05017554.6
(22) Date de dépôt: 12.08.2005
(51) Int. Cl.: B60H 1/24, B62D 25/14

(54) **Elément structurant d'un habitacle de véhicule alimenté en air comportant un module de distribution sélective d'air**
Aufbauelement einer Kfz-Fahrgastzelle mit wählbarer Luftversorgung aufweisendes Modul
Structural element of a vehicle passenger compartment comprising a selective air distribution module

(30) Priorité: 23.09.2004 FR 0410090
(43) Date de publication de la demande: 29.03.2006
(73) Titulaire: Valeo Systèmes Thermiques, 78321 Le Mesnil St Denis Cedex (FR)
(72) Inventeur: Droulez, Eric, 92150 Suresnes (FR); Pouysegur, Serge, 78610 Le Perray En Yvelines (FR); Truillet, Franck, 28410 Bu (FR)

(56) Documents cités:
- EP-A- 0 989 004
- DE-U- 1 953 902
- US-A- 5 678 877
- US-A1- 2002 000 313

## Description

### Domaine technique de l'invention.

L'invention est du domaine des installations de ventilation, chauffage,et/ou climatisation, pour habitacle de véhicule notamment. Elle a pour objet un élément structurant d'un habitacle de véhicule aménagé pour une circulation d'air à son travers en vue de l'aération de cet habitacle.

### Etat de la technique.

On connaît des installations de chauffage, de ventilation et/ou de climatisation pour habitacle de véhicule qui exploite la présence d'un élément structurant du véhicule, notamment une poutre de renfort de l'habitacle, pour véhiculer l'air distribué par l'installation. Ces éléments structurants sont organisés soit pour loger des conduits en provenance de l'installation, soit de manière à constituer eux-mêmes des conduits de distribution d'air. On pourra par exemple se reporter aux documents W00168391 (MAGNA INTERIOR SYS INC), W009849024 (VOLVO PERSONVAGNAR AB), DE4239171 (DAIMLER BENZ AG), FR2799413 (VALEO CLIMATISATION) et EP0989004 (DELPHI TECH INC), qui montre un ensemble comprenant un élément structurant d'un habitacle de véhicule et une installation de ventilation, chauffage et/ou climatisation, conformément au préambule de la revendication 1.

Le problème posé réside dans l'organisation générale de l'élément structurant dont la résistance mécanique, qui constitue sa fonction première, ne doit pas être altérée par son agencement en organe de circulation et de distribution d'air. Il ressort d'une manière générale que ce compromis à trouver tend à diminuer les performances structurelles de l'élément structurant, en raison de la présence d'ouvertures qui constituent des faiblesses mécaniques, de l'utilisation nécessaire en trop grande partie de matériaux peu résistants, matériaux plastiques notamment, ou encore en raison de modalités d'assemblage discontinues entre des éléments constitutifs de l'élément structurant, qui créent des faiblesses structurelles.

En outre, de tels éléments structurants sont agencés pour coopérer avec, voire loger des organes annexes de distribution sélective d'air, tels que des répartiteurs ou analogues, ce qui tend à accroître encore la complexité de leur organisation pour permettre le montage de ces organes annexes et pour permettre un raccordement aisé entre l'élément structurant et/ou les conduits qu'elle loge, avec des conduits ou des bouches de distribution d'air affectés à différentes zones de l'habitacle à aérer.

Il en ressort que la difficulté générale à surmonter réside dans un compromis à trouver entre une simplicité de l'élément structurant, dont la structure doit de préférence offrir intrinsèquement les caractéristiques mécaniques recherchées pour le renfort de l'habitacle notamment, et une organisation de cet élément structurant en organe susceptible de véhiculer sélectivement des flux d'air en provenance d'une installation de chauffage, de ventilation et/ou de climatisation, pour les acheminer vers diverses zones de l'habitacle à aérer. Plus spécifiquement, le nombre de zones respectives de l'habitacle à alimenter en air influence directement le nombre d'ouvertures pratiquées dans l'élément structurant si bien qu'au-delà d'un certain niveau, il n'est plus possible de respecter le couple contraintes mécaniques-contraintes dimensionnelles.

### Objet de l'invention.

Le but général de la présente invention est de proposer un aménagement pour un élément structurant d'un habitacle de véhicule qui est exploité pour la circulation d'air, notamment en provenance d'une installation de chauffage, de ventilation et/ou de climatisation, qui permette de limiter la fragilisation de cet élément structurant au regard du passage de l'air à son travers tout en offrant la possibilité d'alimenter un grand nombre de zones dans l'habitacle.

Il est plus particulièrement visé par la présente invention de proposer un tel élément structurant équipé de moyens permettant d'optimiser le nombre de circuits de distribution d'air sans pour autant affecter de manière rédhibitoire ses qualités intrinsèques de résistance mécanique.

Il est aussi visé par la présente invention de faciliter les opérations nécessaires pour le raccordement entre l'élément structurant et divers conduits d'aération de zones de l'habitacle auxquelles ces conduits sont affectés.

L'invention a pour objet un ensemble comme décrit par la revendication 1.

La démarche inventive de la présente invention a consisté dans sa généralité à exploiter au moins une même ouverture d'évacuation de l'air hors de l'élément structurant pour l'aération de diverses zones de l'habitacle, en rapportant en sortie de cette ouverture un module de distribution sélective d'air pour acheminer l'air, à partir d'une même bouche d'admission, sélectivement vers plusieurs bouches d'évacuation. Ces dispositions sont telles que le nombre d'ouvertures d'évacuation que comporte l'élément structurant à son travers pour l'aération de diverses zones de l'habitacle est inférieur au nombre de bouches de distribution d'air effectivement disponible pour aérer ces diverses zones. De telles dispositions permettent d'éviter une fragilisation inopportune de l'élément structurant. En outre, l'organisation de l'élément structurant est susceptible d'être simplifiée, ce qui est particulièrement avantageux dans le cas de la formation de plusieurs circuits d'air dans son volume intérieur, soit directement soit accessoirement par l'intermédiaire d'un module principal de distribution sélective d'air logé à l'intérieur de l'élément structurant. L'aménagement des circuits d'air à travers l'élément structurant et la disposition du module à l'extérieur de cet élément structurant, en regard des ouvertures d'évacuation que ce dernier comporte, sont choisis en corrélation avec la répartition choisie entre les différents circuits d'air affectés aux zones de l'habitacle à aérer.

Plus particulièrement selon la présente invention, un élément structurant du genre susvisé est principalement reconnaissable en ce qu'il est équipé d'au moins un module de distribution sélective d'air rapporté à une face extérieure de l'élément structurant.

Il ressort de ces dispositions qu'à partir d'une même ouverture d'évacuation d'air que comporte l'élément structurant, plusieurs zones de l'habitacle du véhicule peuvent être distinctement aérées. Il résulte finalement de ces dispositions que la fragilisation de l'élément structurant est limitée, et que le raccordement entre l'élément structurant et des conduits relatifs aux dites zones à aérer, par l'intermédiaire du module, en est simplifié.

Le module est au moins partiellement cloisonné par une paroi de sorte à délimiter au moins deux canaux de distribution dont les débouchés constituent respectivement les bouches d'évacuation. Cette paroi permet donc de séparer les flux d'air à envoyer vers les bouches d'évacuation respectives.

Le module comporte aussi au moins un organe de répartition de l'air admis à l'intérieur du module pour distribuer sélectivement cet air à travers l'une et/ou l'autre des bouches d'évacuation. Il est ainsi possible de contrôler l'alimentation en air des bouches d'évacuation.

Le module est indifféremment porté par un boîtier de l'installation, tel que le boîtier d'un pulseur ou le boîtier d'un évaporateur, ou encore par l'élément structurant, voire encore est conjointement porté par un boîtier de l'installation et par l'élément structurant. Le module peut ainsi être industrialisable en version fixement reliée, voire moulée, aux boîtiers de l'installation mais il peut aussi être produit de manière indépendante.

Selon une première forme de réalisation, le module est disposé en zone centrale de l'élément structurant, les bouches d'évacuation étant notamment respectivement affectées à la diffusion douce et au dégivrage du pare brise. Plus particulièrement, le module comporte une bouche d'évacuation médiane affectée à la diffusion douce, qui est latéralement bordée par des bouches latérales, respectivement droite et gauche, affectées au dégivrage.

Selon cette forme de réalisation, le module est préférentiellement rapporté à la face de l'élément structurant orientée vers le tablier du véhicule.

Selon une deuxième forme de réalisation, le module est disposé en zone latérale de l'élément structurant, les bouches d'évacuation étant notamment respectivement affectées à l'aération arrière et à l'aération de la zone de pieds arrière.

Selon cette forme de réalisation, le module est préférentiellement rapporté à la face arrière ou inférieure de l'élément structurant.

On comprendra que l'élément structurant est susceptible d'être équipé d'un premier module pour la diffusion douce et le dégivrage du pare brise et d'un couple de deuxièmes modules chacun affectés à l'aération arrière et à l'aération de la zone de pied arrière.

### Description des figures.

La présente invention sera mieux comprise à la lecture de la description qui va en être faite de formes préférées de réalisation, en relation avec les figures des planches annexées, dans lesquelles :
La fig.1 est une illustration en perspective d'une poutre de renfort d'un habitacle de véhicule selon une forme préférée de réalisation.
La fig.2 est une illustration en perspective longitudinalement écorchée d'une poutre de renfort représentée sur la fig.1.
La fig.3 est une illustration en perspective transversalement écorchée d'une poutre de renfort représentée sur les fig.1 et fig.2.
La fig.4 est un schéma illustrant une variante de réalisation d'un module de distribution sélective d'air que comporte une poutre de renfort représentée sur les fig.1 à fig.3.
Par convention, les termes amont et aval s'apprécient au regard du sens de circulation du flux d'air dans l'élément considéré.

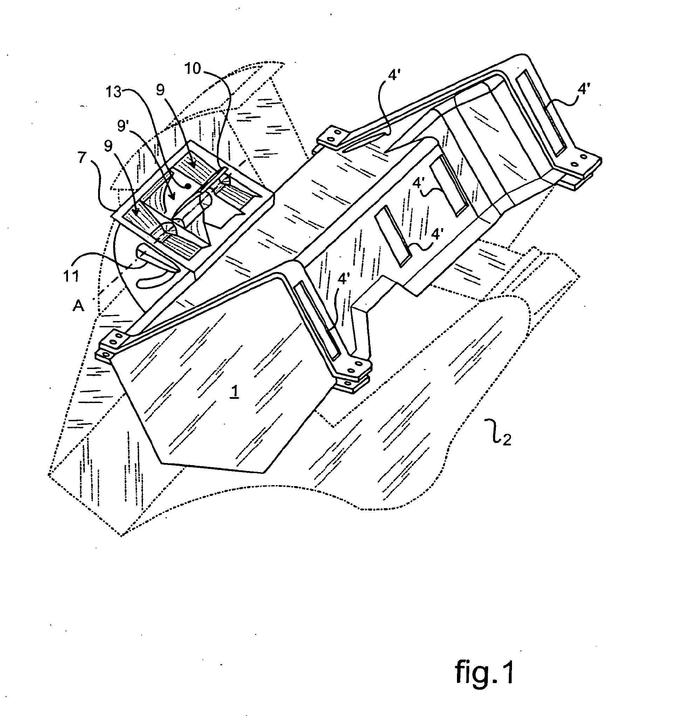

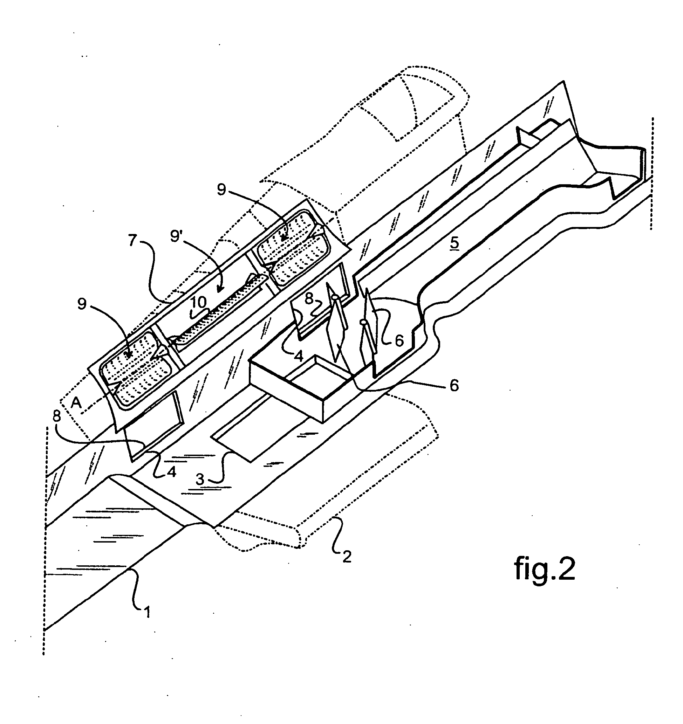

Sur les fig.1 à fig.3, une poutre 1 de renfort d'un habitacle de véhicule est exploitée pour remplir sa fonction de renfort structurel de l'habitacle mais aussi pour véhiculer de l'air en provenance d'une installation 2 de ventilation, chauffage et/ou climatisation. Cette poutre 1 de renfort comporte une ouverture 3 d'admission d'air en provenance de l'installation 2, et est aménagée pour acheminer sélectivement l'air depuis l'ouverture 3 d'admission vers une pluralité d'ouvertures d'évacuation 4, 4'. L'accès de l'air à ces ouvertures d'évacuation 4, 4' est avantageusement contrôlé par des volets 6 qui sont susceptibles d'ouvrir complètement et de fermer complètement cet accès ou de prendre une position intermédiaire.

L'acheminement sélectif de l'air est en variante réalisé par l'intermédiaire d'un module principal 5 de distribution sélective d'air logé à l'intérieur de la poutre 1. Ce module principal 5 est cloisonné et est équipé de volets 6 de distribution sélective d'air.

Sur la figure 1, la poutre 1 comporte notamment en zone médiane un couple d'ouvertures 4 d'évacuation d'air. Ces ouvertures 4 sont exploitées à la fois pour la diffusion douce et pour le dégivrage du pare-brise. En variante, ces ouvertures sont exploitées pour fournir un flux d'air à la zone pieds avant et à la zone aération avant. Selon une autre variante couverte par l'invention, les ouvertures 4 sont utilisées pour fournir un flux d'air à la zone pieds avant et un flux d'air à la zone aération arrière. Selon encore une autre variante de l'invention, les flux d'air peuvent être dédiés au dégivrage du pare-brise et à la zone pieds avant et/ou pieds arrière. La distribution sélective d'air entre ces différentes modalités d'aération de l'habitacle est réalisée par l'intermédiaire d'un module 7 de distribution sélective d'air adjacent à la poutre 1.

Ce module 7 est notamment porté par l'installation 2, en étant apposé contre la face externe correspondante de la poutre 1, pour mettre directement en relation entre elles les ouvertures d'évacuation 4 de la poutre avec des bouches correspondantes d'admission 8 du module 7. Avantageusement, cette face externe est celle qui est orientée globalement vers le tablier du véhicule séparant l'habitacle du compartiment moteur.

Plus précisément, le module 7 est fixement relié à l'installation 2. Avantageusement, les éléments constitutifs du module 7 sont moulés intégralement avec le ou les boîtiers principaux de l'installation 2. L'installation 2 et le module 7 forme ainsi une ensemble unitaire. Ainsi, le module 7 et l'installation 2 définissent une zone de réception dans laquelle s'intègre l'élément structurant 1 de sorte à mettre aisément en regard l'ouverture d'admission 3 et une bouche principale d'évacuation de l'installation 2 tout en mettant aussi en regard les ouvertures d'admission 4 de l'installation 2 avec la bouche d'admission 8 du module 7.

Selon une autre variante, le module 7 est directement fixé sur l'élément structurant 1 sans être particulièrement lié à l'installation 2. Il s'agit donc dans ce cas de produire une pièce indépendante, facilement industrialisable et intégrable aisément sur la poutre structurante 1.

En variante, le module 7, 7' peut aussi être porté conjointement par un boîtier de l'installation 2 et par l'élément structurant 1.

Sur l'exemple de réalisation illustré, ce module comporte trois bouches d'évacuation 9, 9' de l'air qu'il reçoit : un couple de bouches d'évacuation latérales 9 est destiné par exemple au dégivrage du pare-brise, tandis qu'une bouche médiane d'évacuation 9' est destinée, par exemple, à la diffusion douce. Bien entendu, il est envisagé de disposer la bouche d'évacuation de l'air dédié au dégivrage entre les deux bouches d'évacuation latérales, quant à elles dédiées à la zone diffusion douce. Au moins deux des bouches d'évacuation 9, 9' sont distinctes en ce sens qu'elles alimentent en air des zones de l'habitacle différenciées.

Chacune des bouches d'évacuation 9, 9' que comporte le module 7 est équipée d'un organe répartition d'air 10 du type volet drapeau ou papillon. Cet organe 10 présente au moins deux volets. Dans cet exemple particulier, l'organe 10 englobe trois volets conjointement montés mobiles en rotation autour d'un axe d'articulation commun A. Ces volets 10 sont manoeuvrables par un actionneur 11 de sorte que l'air soit sélectivement évacué hors du module 7 à travers l'une ou l'autre des bouches d'évacuation 9, 9' affectées par exemple au dégivrage et à la diffusion douce. Selon une autre variante de l'invention, les volets sont montés sur un même axe et sont manoeuvrables séparément au moyen d'actionneur manuel ou automatique indépendant. Une autre variante couverte par l'invention repose sur le fait que ces volets sont disposés sur des axes séparés manoeuvrables conjointement ou de manière séparée.

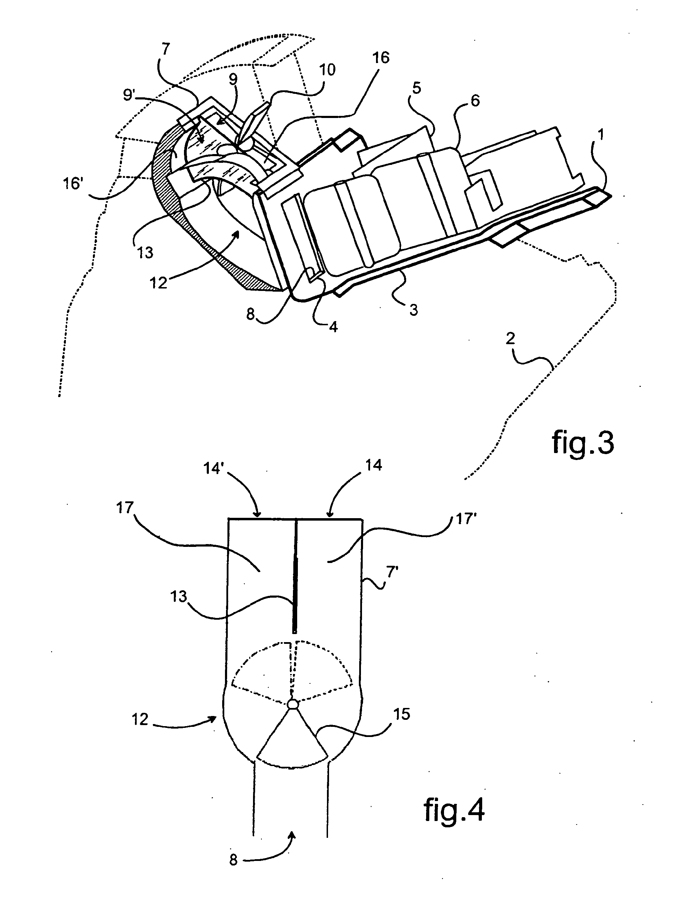

La figure 3 montre plus particulièrement que le module 7 est principalement constitué d'un caisson qui comporte une chambre 12 d'admission d'air. Une zone avale de cette chambre 12 est cloisonnée par une paroi 13 délimitant des canaux de distribution 16 et 16' dont les débouchés constituent les bouches d'évacuation 9 , 9' respectivement affectées à des zones de l'habitacle, par exemple : la diffusion douce et au dégivrage.

Sur la variante illustrée sur la fig.4, un module 7' est notamment destiné à être mis en relation avec une ouverture d'évacuation 4' d'air hors de la poutre 1, qui est affectée à l'aération arrière et à l'aération de la zone de pied arrière. Selon un autre mode de réalisation de l'invention, l'ouverture d'évacuation 4' est dédiée au dégivrage des vitres latérales avant et arrière du véhicule. Selon une autre variante, le flux d'air en provenance de l'ouverture d'évacuation 4' est scindé en deux flux d'air au moyen du module 7' en vue d'alimenter la zone dédiée aux vitres latérales avant et la zone dédiée aux pieds arrière. En variante, le module 7' est susceptible de fournir un flux d'air à un siège avant ou à un module de ventilation spécifiquement dédié à un siège du véhicule.

Un tel module 7' est notamment prévu pour être installé en zone latérale de la poutre 1. Ce module 7' est équipé d'un organe répartition d'air 15, tel qu'un volet tambour, ménagé dans la chambre d'admission 12 en amont de la paroi 13, pour répartir l'air admis à l'intérieur du module 7' vers l'un et/ou l'autre des canaux de distribution 17, 17' qui débouchent sur les bouches d'évacuation 14, 14'.

La présente invention couvre aussi un élément structurant d'un habitacle de véhicule équipé d'un premier module 7, par exemple pour la diffusion douce et le dégivrage du pare brise, et d'un couple de deuxièmes modules 7' chacun affectés par exemple à l'aération arrière et à l'aération de zone de pieds arrière.

## Revendications

1. Ensemble comprenant un élément structurant (1) d'un habitacle de véhicule, une installation (2) de ventilation, chauffage et/ou de climatisation, l'élément structurant (1) comportant au moins une ouverture d'admission (3) d'air en provenance de l'installation (2) de ventilation, chauffage et/ou de climatisation, et une pluralité d'ouvertures d'évacuation (4, 4') de l'air admis, l'élément structurant (1) constituant un organe à travers lequel circule de l'air en provenance d'une de l'installation (2) de ventilation, chauffage et/ou de climatisation,
**caractérisé en ce que** l'ensemble comprend au moins un module (7, 7') de distribution sélective d'air adjacent à I élément structurant (1) qui comporte :
- au moins une bouche (8) d'admission d'air en communication avec une des ouvertures d'évacuation (4) de l'élément structurant (1),
- au moins deux bouches d'évacuation (9, 9'; 14, 14') d'air distinctes affectées à l'aération de zones respectives de l'habitacle
de telle sorte que l'air en provenance de l'installation (2) de ventilation, chauffage et/ou de climatisation pénètre dans l'élément structurant (1) par la bouche (8) d'admission d'air et en sort par l'ouverture d'évacuation (4) pour pénétrer dans le module (7, 7') de distribution sélective d'air.

2. Ensemble selon la revendication 1, **caractérisé en ce que** le module (7,7') est au moins partiellement cloisonné par une paroi (13) de sorte à délimiter au moins deux canaux (16, 16' ; 17, 17') de distribution dont les débouchés constituent respectivement les bouches d'évacuation (9, 9' ; 14, 14').

3. Ensemble selon l'une des revendications 1 ou 2, **caractérisé en ce que** le module (7, 7') comporte au moins un organe de répartition (10, 15) de l'air admis à l'intérieur du module (7, 7') pour distribuer sélectivement cet air à travers l'une et/ou l'autre des bouches d'évacuation (9, 9' ; 14, 14').

4. Ensemble selon l'une quelconque des revendications 1 à 3, **caractérisé en ce que** le module (7, 7') est porté par un boîtier de l'installation (2).

5. Ensemble selon l'une quelconque des revendications 1 à 3, **caractérisé en ce que** le module (7, 7') est porté par l'élément structurant (1).

6. Ensemble selon l'une quelconque des revendications précédentes, **caractérisé en ce que** le module (7) est disposé en zone centrale de l'élément structurant (1) de sorte à alimenter les bouches d'évacuation (9, 9') respectivement affectées à une zone de l'habitacle dédiée à la diffusion douce et à une zone de l'habitacle dédiée au dégivrage du pare brise.

7. Ensemble selon l'une quelconque des revendications précédentes, **caractérisé en ce que** le module (7, 7') coopère avec une face de l'élément structurant (1) orientée vers un tablier séparant un compartiment moteur de l'habitacle dudit véhicule.

8. Ensemble selon l'une quelconque des revendications précédentes, **caractérisé en ce que** le module (7') est disposé en zone latérale de l'élément structurant (1).

9. Ensemble selon la revendication 8, **caractérisé en ce que** les bouches d'évacuation (14, 14') sont respectivement affectées à une zone de l'habitacle dédiée à l'aération arrière et à une zone de l'habitacle dédiée à l'aération de la zone de pieds arrière.

## Claims

1. Assembly including a structural element (1) of a vehicle passenger compartment and a ventilation, heating and/or air conditioning system (2), the structural element (1) consisting of at least one inlet opening (3) for air coming from the ventilation, heating and/or air conditioning system (2), and a plurality of outlet openings (4, 4') for the inlet air, the structural element (1) constituting a body through which air coming from one of the ventilation, heating and/or air conditioning system (2) circulates,
**characterized in that** the assembly includes at least one selective air distribution module (7, 7') adjacent to the structural element (1) which consists of:
- at least one air inlet vent (8) communicating with one of the outlet openings (4) of the structural element (1),
- at least two distinct air outlet vents (9, 9'; 14, 14') assigned to the ventilation of respective zones of the passenger compartment such that the air coming from the ventilation, heating and/or air conditioning system (2) passes into the structural element (1) through the air inlet vent (8) and leaves it through the outlet opening (4) in order to pass into the selective air distribution module (7, 7').

2. Assembly according to Claim 1, **characterized in that** the module (7, 7') is at least partially partitioned by a wall (13) so as to define at least two distribution ducts (16, 16'; 17, 17'), the vents of which constitute respectively the outlet vents (9, 9'; 14, 14').

3. Assembly according to either of Claims 1 and 2, **characterized in that** the module (7, 7') consists of at least one distribution body (10, 15) for air inlet into the interior of the module (7, 7') in order to distribute said air selectively through the one and/or the other of the outlet vents (9, 9'; 14, 14').

4. Assembly according to any one of Claims 1 to 3, **characterized in that** the module (7, 7') is carried by a casing of the system (2).

5. Assembly according to any one of Claims 1 to 3, **characterized in that** the module (7, 7') is carried by the structural element (1).

6. Assembly according to any one of the preceding claims, **characterized in that** the module (7) is arranged in the central zone of the structural element (1) so as to supply the outlet vents (9, 9') assigned respectively to a zone of the passenger compartment dedicated to gentle diffusion and to a zone of the passenger compartment dedicated to the de-icing of the windscreen.

7. Assembly according to any one of the preceding claims, **characterized in that** the module (7, 7') cooperates with a surface of the structural element (1) oriented toward a panel separating an engine compartment from the passenger compartment of said vehicle.

8. Assembly according to any one of the preceding claims, **characterized in that** the module (7') is arranged in the lateral zone of the structural element (1).

9. Assembly according to Claim 8, **characterized in that** the outlet vents (14, 14') are assigned respectively to a zone of the passenger compartment dedicated to rear ventilation and to a zone of the passenger compartment dedicated to the ventilation of the rear foot well.

## Patentansprüche

1. Einheit, die ein Strukturelement (1) eines Fahrzeuginnenraums und eine Lüftungs-, Heiz- und/oder Klimaanlage (2) enthält, wobei das Strukturelement (1) mindestens eine Einlassmündung (3) für Luft von der Lüftungs-, Heiz- und/oder Klimaanlage (2) und eine Vielzahl von Auslassmündungen (4, 4') der eingelassenen Luft aufweist, wobei das Strukturelement (1) ein Organ bildet, durch das Luft strömt, die von einer, der Lüftungs-, Heiz- und/oder der Klimaanlage (2) kommt,
**dadurch gekennzeichnet, dass** die Einheit mindestens ein an das Strukturelement (1) angrenzendes Modul (7, 7') zur selektiven Luftausgabe enthält, das aufweist:
- mindestens eine Lufteinlassöffnung (8) in Verbindung mit einer der Auslassmündungen (4) des Strukturelements (1),
- mindestens zwei unterschiedliche Luftauslassöffnungen (9, 9'; 14, 14'), die der Belüftung jeweiliger Zonen des Innenraums zugeteilt sind,
so dass die von der Lüftungs-, Heiz- und/oder Klimaanlage (2) kommende Luft in das Strukturelement (1) durch die Lufteinlassöffnung (8) eindringt und es durch die Auslassmündung (4) verlässt, um in das Modul (7, 7') zur selektiven Luftausgabe einzudringen.

2. Einheit nach Anspruch 1, **dadurch gekennzeichnet, dass** das Modul (7, 7') zumindest teilweise durch eine Wand (13) unterteilt wird, um mindestens zwei Ausgabekanäle (16, 16'; 17, 17') zu begrenzen, deren Einmündungen die Auslassöffnungen (9, 9'; 14, 14') bilden.

3. Einheit nach einem der Ansprüche 1 oder 2, **dadurch gekennzeichnet, dass** das Modul (7, 7') mindestens ein Organ zur Verteilung (10, 15) der ins Innere des Moduls (7, 7') eingelassenen Luft aufweist, um diese Luft selektiv durch die eine und/oder die andere der Auslassöffnungen (9, 9'; 14, 14') auszugeben.

4. Einheit nach einem der Ansprüche 1 bis 3, **dadurch gekennzeichnet, dass** das Modul (7, 7') von einem Gehäuse der Anlage (2) getragen wird.

5. Einheit nach einem der Ansprüche 1 bis 3, **dadurch gekennzeichnet, dass** das Modul (7, 7') von dem Strukturelement (1) getragen wird.

6. Einheit nach einem der vorhergehenden Ansprüche, **dadurch gekennzeichnet, dass** das Modul (7) in der zentralen Zone des Strukturelements (1) angeordnet ist, um die Auslassöffnungen (9, 9') zu speisen, die einer Zone des Innenraums, die für die sanfte Verteilung bestimmt ist, bzw. einer Zone des Innenraums zugeteilt sind, die zum Enteisen der Windschutzscheibe bestimmt ist.

7. Einheit nach einem der vorhergehenden Ansprüche, **dadurch gekennzeichnet, dass** das Modul (7, 7') mit einer Seite des Strukturelements (1) zusammenwirkt, die zu einer Stirnwand ausgerichtet ist, die einen Motorraum vom Innenraum des Fahrzeugs trennt.

8. Einheit nach einem der vorhergehenden Ansprüche, **dadurch gekennzeichnet, dass** das Modul (7') in der seitlichen Zone des Strukturelements (1) angeordnet ist.

9. Einheit nach Anspruch 8, **dadurch gekennzeichnet, dass** die Auslassöffnungen (14, 14') einer für die so genannte hintere Belüftung bestimmten Zone des Innenraums bzw. einer für die Belüftung der hinteren Fußzone bestimmten Zone des Innenraums zugeteilt sind.
